# EUROPEAN PATENT APPLICATION

(11) **EP 1 955 920 A2**
(43) Date of publication of application: **13.08.2008**
(21) Application number: 08002025.8
(22) Date of filing: 01.02.2008
(51) Int. Cl.: B62B 3/04

(54) **High safety transport devices for feeding and unloading in sterilizing plants and for distribution to destination departments**

(30) Priority: 07.02.2007 IT MI20070038 U
(71) Applicant: Alvi Officine Meccaniche Edgardo Viazzo & C. SRL, 13030 Caresanablot VC (IT)
(72) Inventor: Banchet, Gilbert, 13030 Caresanablot (IT)
(74) Representative: Di Iorio, Vincenzo

(57) **Abstract**

There are shown a series of transport devices for products to be sterilized by a shuttle truck (NA), that allow the introduction and extraction of the same shuttle truck into the sterilizing plants by the use of suitable transfer trolley (C) with runways orthogonal and parallel to sterilizer, and further of a cubicle trolley (1) for transferring the shuttle truck in a sterilized condition, and finally of a waiting platform in the destination position. Each component is supplied with control devices that can be controlled by operators in a sure way without errors.

## Description

This model refers to the transport in the sterilization field of surgery instruments, hospital clothes and various products and of any other object that must be sterilized.

The present model is based on a cubicle trolley that is used for transporting the shuttle truck keeping its sterilization status. This cubicle trolley support and fixes by guides a shuttle truck that holds onto suitable supports the baskets or support planes or hermetically closed containers foreseen for the transport of materials to be sterilized. The fastening of the shuttle truck in the cubicle is got by stop latch or latches that cannot be unlocked if it is not hooked to the cubicle a transfer trolley supplied with suitable locking and unlocking lever for joining/freeing the shuttle truck to/from cubicle trolley, and with other connection chute devices, that are better shown in the following.

The transfer trolley is on its turn supplied with guides for being able to extract the shuttle truck in direction orthogonal to the cubicle door or for moving the shuttle truck in direction orthogonal to the extraction direction for being able to unload the shuttle truck into a sterilizing tunnel orthogonal to the cubicle output face or to receive it at the output of the same tunnel.

Another new characteristic of the model is based on the observation that, owing to eventual different heights of cubicle base or of the platform from the pavement, and owing to wear and deflection under load of rubber wheels of cubicle trolley, usually it is not possible to obtain a perfect levelling between transfer trolley and cubicle; therefore it was found the solution for supplying the transfer trolley with liftable chutes that can be lifted by contact and that form a bridge between trolley and cubicle platform, by which it is allowed a traverse of the shuttle truck regular and without jams during the access to the same shuttle truck.

Another important characteristic of the shuttle truck is the replacement of its wheels, usually made of the swinging type for normal trolleys, with special supports sliding on balls, therefore also the sliding in direction orthogonal to the extraction direction is made without jams and without traverses with respect to the sliding axis of shuttle truck.

Another new characteristic is the use of a hooking device for fixing the transfer trolley to both end sides of the sterilizing tunnel, and this device is foreseen with a chute driven by the trolley, made-up in a fashion similar to the one precedently established, but having an extension equal to the whole width of sterilizer opening, by which it is made easier the loading and unloading of the shuttle truck into/out of the sterilization tunnel.

Further the hooking device has a stop latch for avoiding the accidental unloading of the shuttle truck from the transfer trolley, that is made-up by a little cylinder of the type for lock shaped with a sloped plane end and sliding in a pipe, that is extracted towards outside by an internal spring and that is caused to return towards the inside for disengaging the transfer trolley by a pedal controlled by the operator. In this manner both the loading and the unloading of the shuttle truck are obtained with high safety degree avoiding the accidental unloading by devices substantially simple but that are new in its whole application.

Other characteristics and advantages of the utility model shall appear by the reading of the following description of different embodiments of the model, this description being made with reference to annexed drawings, in which:
Figure 1 shows in perspective view a cubicle trolley in its condition with open doors with related support guides for the shuttle truck;
Figure 2 shows in perspective view a transfer trolley for the shuttle truck with guides for the movement in directions both longitudinal and orthogonal to the output face of cubicle trolley;
Figure 3 is a perspective view from the lower side of the transfer trolley with related lever mechanism for hooking it to the cubicle trolley or to the waiting platform, and for locking/unlocking the shuttle truck;
Figure 4 is a perspective view of the hooking device of transfer trolley onto the input or output door of the sterilizing tunnel with chute mechanisms and locking mechanisms by latch;
Figure 5 is a perspective view of the new shuttle truck supplied with ball sliding supports instead of swinging wheels, as normally used in this application field, that allow a movement of shuttle truck in two directions orthogonal with one another.

Now it is described the model in its various parts with reference to the annexed figures. The various figures show the similar elements with the same references.

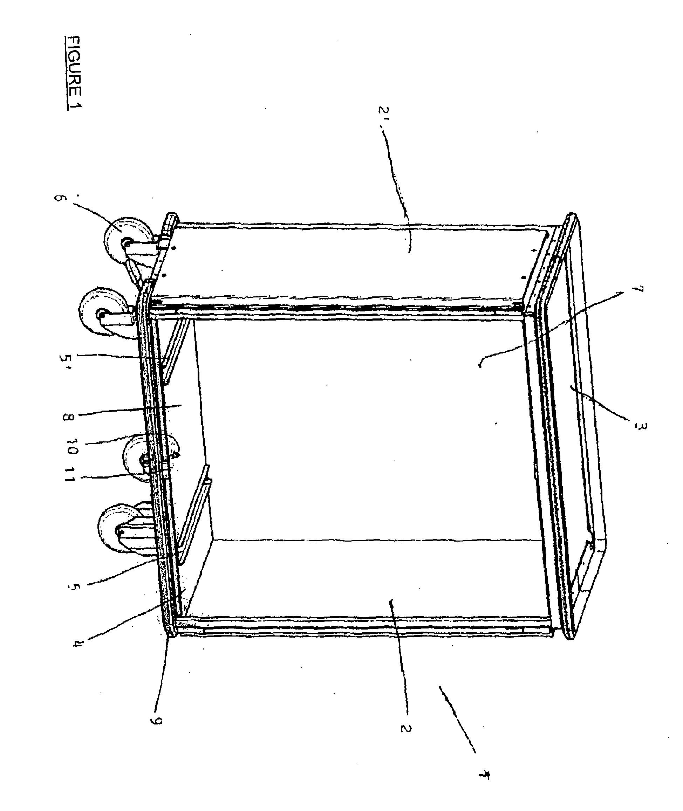

Figure 1 shows a transfer cubicle for materials to be sterilized in sterilizing tunnel (not represented) or already sterilized, supplied with two lateral walls 2, 2', a superior wall 3, a bottom plane 4, two or more guides 5, 5' and swinging wheels 6 of well-known type. Further it is provided, as usual, with a rear wall 7 and a lower surface 8 with external bumpers 9 for the contact with a trolley C used for transferring the shuttle truck. Further it is foreseen a latch 10 for stopping the shuttle truck NA that is laid into the cubicle, which latch can be unlocked by its lowering by the mechanism 11 (located under the cubicle) driven only after the hooking of a loading/unloading trolley C of the shuttle truck NA. The guides 5, 5' are used for receiving a shuttle truck NA having conventional wheels or the new alternative type with swinging wheels, described better in the following.

Naturally the cubicle is also supplied with 2 doors with continuous gasket that are hinged vertically.

The door closing is guaranteed by a latch system that locks the doors in superior and inferior positions.

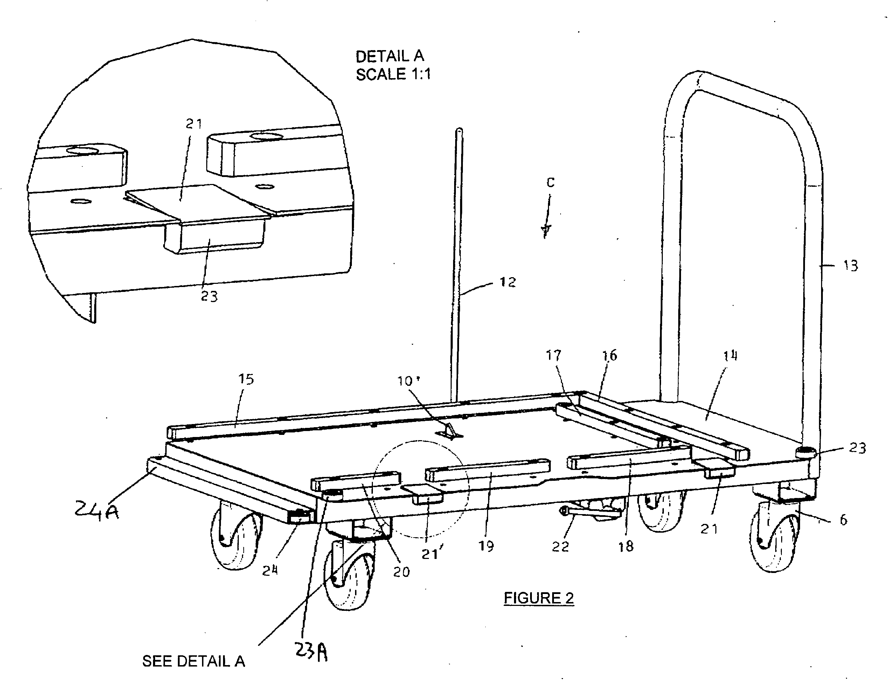

Figure 2 shows the transfer trolley C in its new construction with double series of guides orthogonal with one another.

The trolley C is supplied with a locking/unlocking lever 12 for the shuttle truck, described in the following, that controls both the stop 10' provided approximately in the centre of the loading position for shuttle truck, and with the detail 22 that locks the transfer trolley C to the cubicle.

The position shown for locking the lifted stop element is the position obtained when the control lever 12 is vertical, orthogonal to the pavement.

The handling grip 13 allows the traverse of the trolley C controlled by an operator. The platform 14 has generally a rectangular form and is supplied with longitudinal guides 15, 18, 18, 20 and transversal guides 16, 17 with suitable passages delimited by the guides for the ball wheels of the shuttle truck NA. The guide 15 forms a transversal stop of the shuttle truck as it is provided on the side opposite to the output side of shuttle truck. The guide 16 limits together with the guide 17 a passage channel for a couple of wheels, the guide 17 ending just before the guide 15 for limiting a passage channel in the direction of the longitudinal output side for the shuttle truck. The guide 17 ends, on the side directed to cubicle, just before the guide 18, therefore it forms a passage channel, similar to the former one, in longitudinal direction.

The guides 18, 19, 20 form between its ends faced and opposed some channels in which there are foreseen the chutes 21, 21' that are lifted for compensating eventual differences of height between the trolley C and the cubicle 1 by the collision with bumper 9 provided on the cubicle 1. The lever 12 controls the unlocking of the shuttle truck NA when it must be transferred within the cubicle and causes also the rotation of the transversal lever 22 that acts on the wedge control 11 of stop 10 within the cubicle 1. When the lever 12 is vertical, as it is shown in Figure 2, the stop 10' is lifted, then it locks the shuttle truck, and the lever 22 is in horizontal position, than it does not cause any movement of the stop 10 of shuttle truck contained in cubicle 1. The wheels 6 are similar to the classic ones for cubicle allowing an orientation into the various move directions. The chutes 21, 21' compensate the eventual differences of height between the transfer trolley C and the cubicle 1. Its lifting is automated by the collision against the bumper 9 of cubicle. The longitudinal approaching wall is provided with bearings 23 and 23A for centring into the cubicle and the heading includes the bearings 24 and 24A for centring into the hooking device of the sterilizer.

The detail "A" shows the particular form of the chute 21 with prismatic projection towards the low side with lower chamfering that is engaged with the bumper 9 of cubicle and then it is lifted automatically by contact with the bumper. The chute 21, 21' is kept slightly sloped downwards owing to its weight in the rest condition. When the shuttle truck is engaged with the cubicle, the bumper 9 and the step obtained in the cubicle bottom adapt the chute 21, 21' at the height of the bottom plane 4 of the cubicle 1.

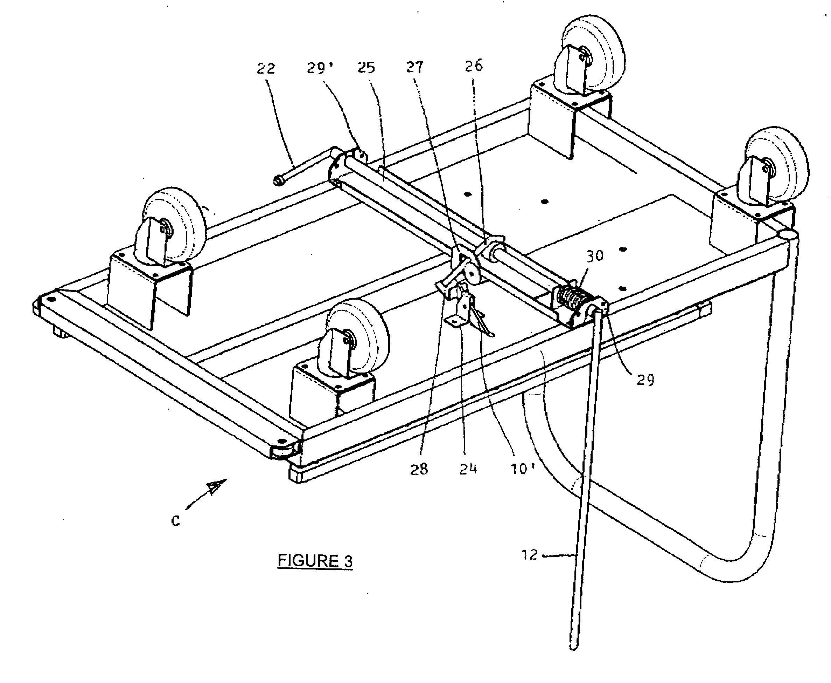

Figure 3 shows a view of the transfer trolley C from the lower side for showing the lever system for unlocking/locking the transfer trolley C with/from the cubicle 1 or with/from the waiting platform, in which the control lever 12 is provided in vertical position supported on the supports 29, 29' and joined to the control lever 22 for the lock of the shuttle truck NA to the cubicle or to the waiting platform. The rod 25 joins the two levers 22 e 12 in a rigid manner, and it is provided the torsion spring 30 for bucking the bar 25 joined to the levers 12 and 22. It is provided a further lever 26, that has a stroke stop 27 in the form of closed ring, and this lever is joined to the bar 25. This lever 26 acts onto the square 28 joined to the stroke stop 10' that is used for locking the shuttle truck NA onto the transfer trolley C and that is hinged into the hinge with related support 24. When the shuttle truck is in locked position onto the transfer trolley C, the trolley lever 12 is located in vertical rest position 10' and the stroke stop 10' of shuttle truck is lifted from the bottom plane of trolley 14 as also shown in Figure 2. After having approached the transfer trolley C to the cubicle 1, it is driven the lever 12 by its rotation and it is unlocked the shuttle truck from the transfer trolley C lowering the stroke stop 10' and contemporaneously the lever 22 joins the trolley C to the cubicle 1 by the mechanism 11.

When it is made the loading move of the shuttle truck into the cubicle, the lever 12 is driven again bringing it in vertical position therefore the stroke stop 10 of cubicle is lifted locking definitively the shuttle truck into the cubicle 1. In this manner it is possible to free the transfer trolley C from the cubicle for a following loading.

It must be noticed that, during the approaching of the trolley to the cubicle, contemporaneously the chutes 21, 21' compensate the eventual difference of height between cubicle and transfer trolley, almost always present owing to the wear of the wheels and of construction tolerances of the pavement.

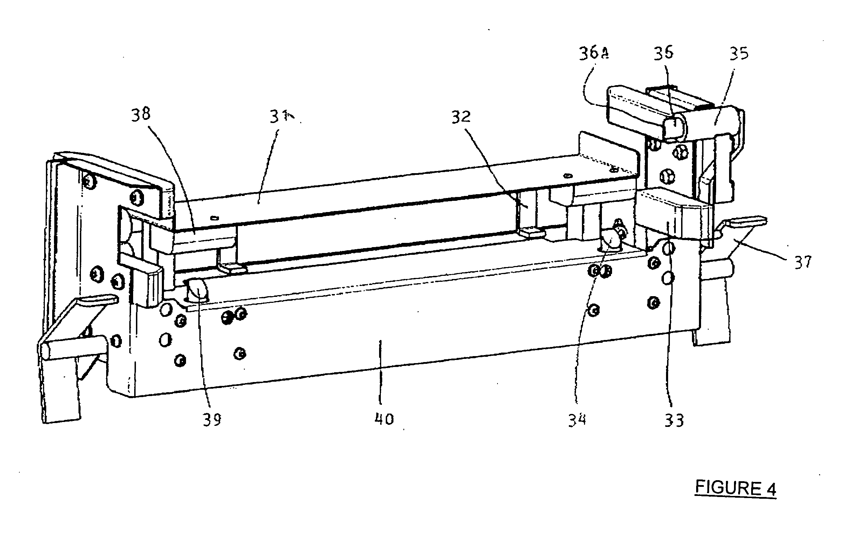

Figure 4 shows in an input position contemporaneously the hooking and adjusting device of the sterilizer (not represented in Figure) to the above mentioned transfer trolley C, supplied with a chute 31 driven in rotation by the bumpers of bearing blocks 38.

The blocks 33 allow the regular traverse of the shuttle truck NA without encountering obstacles in the step between the trolley C and the sterilizer during the loading of the shuttle truck onto the trolley. Further in the same position, but on one side, it is shown a stop device made up of a pipe 35 and by a cylindrical latch 36 with sloped end 36A for locking the shuttle truck in a movement direction, but for unlocking it in the other movement direction. It is not provided in the input of sterilizer but only at its output. The lateral guides for making easier the input 33 are directed in the movement direction for guiding the same trolley C in fitting to the sterilizer hooking device.

There are provided also other latches 34, 39 in the two ends of support 40 that lock in stable position the trolley C with respect to hooking device of sterilizer.

The latch 35, 36 is normally provided only on the output side of sterilizer for being able to free the shuttle truck in a controlled manner by the pedal 37.

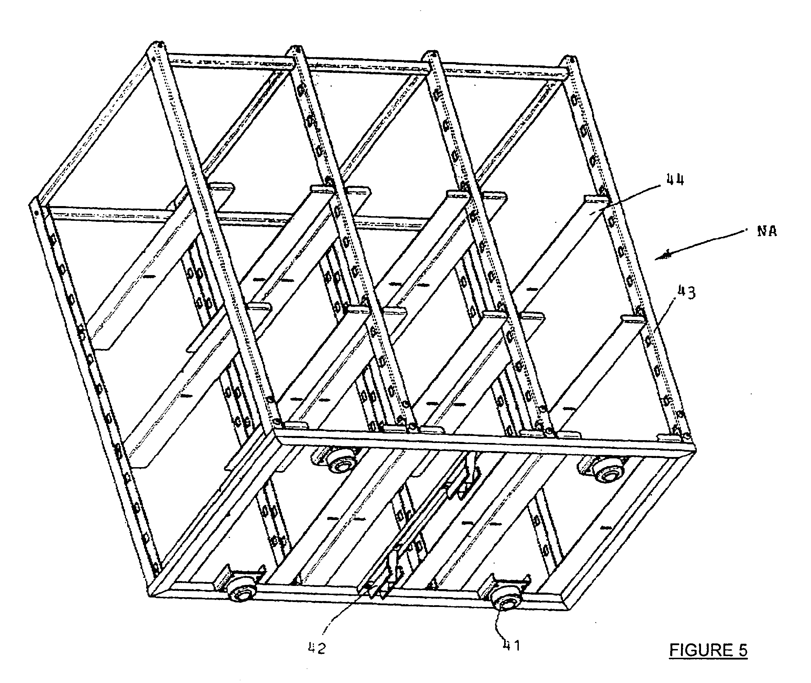

The Figure 5 shows the construction of the shuttle truck with four wheels 41 formed by a commercial ball support with related circular support holding in its inside little rolling balls for supporting the central ball. Then there are foreseen the stop devices 42 for being engaged with the cubicle latch shown in Figure 1 and the latch on the transfer trolley C shown in Figure 2. The remainder of the construction of shuttle truck is of the well-known type with uprights 43 and guides 44 for containers to be sterilized.

Although this model was described with reference to one particular embodiment, many other variants and modifications and other uses will be evident to the person ordinarily skilled of the art. Therefore it is preferred that this model is not limited by the specific shown description, but only by the annexed claims.

## Claims

1. High safety devices for the transport of baskets, shelves and closed containers foreseen for holding products to be sterilized formed by shuttle truck, cubicle trolley holding the shuttle truck, transfer trolley and waiting platform, but not exclusively by these elements, with new safety and shunting devices for products onto runways orthogonal or parallel to the face of cubicle trolley, with control devices suitably controlled automatically for preventing any error of operators, **characterized in that** a cubicle trolley is used for transferring the shuttle keeping the sterilization condition, in which the cubicle trolley supports by guides a shuttle truck that holds onto suitable supports the material to be sterilized, in which the fastening of the shuttle truck into the cubicle is got by stop latch or latches that cannot be unlocked if it is not hooked to the cubicle trolley a transfer trolley supplied with suitable locking and unlocking lever for joining/disengaging the shuttle to/from the cubicle or to/from the waiting platform and supplied with other connection chute devices.

2. Devices according to claim 1, **characterized in that** also the transfer trolley is supplied with a fastening system of the shuttle truck as shown in claim 1.

3. Devices according to preceding claims, **characterized in that**, for compensating the eventual different heights from the pavement to the cubicle basis or to the waiting platform and the wear and deflection under load of rubber wheels of cubicle trolley, there are provided on the transfer trolley some chutes that can be lifted by the contact between trolley and lower cubicle platform, therefore it is obtained a regular traverse of shuttle truck and without mechanical jams.

4. Devices according to preceding claims, **characterized in that** the shuttle truck, in replacement of wheels usually made of the swinging type for normal trolleys, has special supports sliding on balls, therefore also the sliding in direction orthogonal to the extraction direction can be made without jams and without traverses with respect to the sliding axis of shuttle truck.

5. Devices according to preceding claims, **characterized in that** the hooking device fixed to both openings of the sterilizing tunnel has a chute driven by the transfer trolley, made-up in a manner similar to the one precedently mentioned, but having an extension equal to the whole width of sterilizer opening, therefore it is made easier the loading/unloading of the shuttle truck into/out of the sterilizer.

6. Devices according to preceding claims, **characterized in that** the hooking device fixed to the tunnel output opening has an end stop latch for avoiding the accidental unloading of the shuttle truck from the transfer trolley, this stop latch being made-up in simple manner with a cylinder of the type for lock shaped with an sloped end plane and sliding into a pipe, that is extracted towards outside by an internal spring and that is caused to return towards the inside by the correct positioning of the shuttle truck for disengaging the transfer trolley by a pedal controlled by the operator, in this manner both the loading and the unloading of the shuttle truck are obtained with high safety degree for preventing any error.
